# EUROPÄISCHE PATENTSCHRIFT

(11) **EP 2 883 074 B1**
(45) Veröffentlichungstag und Bekanntmachung des Hinweises auf die Patenterteilung: **08.06.2016**
(21) Anmeldenummer: 13762049.8
(22) Anmeldetag: 02.07.2013
(51) Int. Cl.: G01S 3/80, G01H 3/08

(54) **VERFAHREN UND VORRICHTUNG ZUM BESTIMMEN EINES FREQUENZLINIENMUSTERS INNERHALB WENIGSTENS EINES AMPLITUDENSPEKTRUMS**
METHOD AND APPARATUS FOR DETERMINING A FREQUENCY LINE PATTERN WITHIN AT LEAST ONE AMPLITUDE SPECTRUM
PROCÉDÉ ET DISPOSITIF POUR DÉTERMINER UN MODÈLE DE LIGNES DE FRÉQUENCE DANS AU MOINS UN SPECTRE D'AMPLITUDE

(30) Priorität: 07.08.2012 DE 102012015637
(43) Veröffentlichungstag der Anmeldung: 17.06.2015
(73) Patentinhaber: ATLAS ELEKTRONIK GmbH, 28309 Bremen (DE)
(72) Erfinder: MEERPOHL, Gregor, 27793 Wildeshausen (DE)
(74) Vertreter: Jeschke, Alexander
(86) Internationale Anmeldenummer: PCT/DE2013/100242
(87) Internationale Veröffentlichungsnummer: WO 2014/023294

(56) Entgegenhaltungen:
- DE-C1- 2 750 204
- MELVIN J HINICH: "Detecting a Hidden Periodic Signal When Its Period is Unknown", IEEE TRANSACTIONS ON ACOUSTICS, SPEECH AND SIGNAL PROCESSING, IEEE INC. NEW YORK, USA, Bd. ASSP-30, Nr. 5, 1. Oktober 1982 (1982-10-01), Seiten 747-750, XP001422207, ISSN: 0096-3518
- GLOZA ET AL: "Identification Methods of Underwater Noise Sources Generated by Small Ships", ACTA PHYSICA POLONICA A, Bd. 119, 1. Januar 2011 (2011-01-01), Seiten 961-965, XP055039959,
- KUEHNLE L: "CLASSIFICATION AND IDENTIFICATION - CAI - BY SUBMARINE SONARS", NAVAL FORCES, MLONCH, FARNBOROUGH, GB, 1. Januar 1987 (1987-01-01), XP001149484, ISSN: 0722-8880

## Beschreibung

Die Erfindung betrifft ein Verfahren zum Bestimmen eines Frequenzlinienmusters innerhalb wenigstens eines Amplitudenspektrums der im Oberbegriff von Anspruch 1 genannten Art sowie eine Vorrichtung zum Ausführen eines derartigen Verfahrens gemäß dem Oberbegriff von Anspruch 15.

Aus der Wasserschalltechnik ist bekannt, dass Wasserfahrzeuge, wie Schiffen, U-Boote, Unterwasserlaufkörper etc., anhand der von ihnen abgestrahlten Betriebsgeräusche detektiert und klassifiziert werden können. Eine derartige Detektion und Klassifizierung bei Luftfahrzeugen, wie Flugzeuge und Hubschrauber, ist auch aus der Luftschalltechnik bekannt.

Das Betriebsgeräusch eines Wasserfahrzeugs wird hauptsächlich durch seine Antriebsmaschinen verursacht und von einer Sonaranlage empfangen. Aufgrund des antreibenden Propellers, der Turbinen, der Generatoren und/oder Pumpen weist ein aus einem Frequenzspektrum des empfangenen Geräusches erzeugtes Amplitudenspektrum signifikante Frequenzlinien auf.

Bekannte Algorithmen zur Klassifizierung von Fahrzeugen aufgrund der abgestrahlten Betriebsgeräusche benötigen als Eingangsdaten möglichst vollständige Frequenzlinienmuster. Anhand des Frequenzlinienmusters können Informationen über die Grundfrequenz, das Überhöhungsmuster sowie evtl. vorhandene Dubletten unter den Frequenzlinien eines zugehörigen Fahrzeugs gewonnen werden.

Mit Hilfe eines Regelwerkes sowie einer Datenbasis lassen sich dann die Antriebsdaten des zu klassifizierenden Fahrzeugs ermitteln, woraus sich die entsprechende Klassifikation ergibt.

Herkömmlicherweise werden dem Algorithmus zur Klassifizierung die benötigten Eingangsdaten manuell durch einen Bediener eingegeben. Die Eingabe erfolgt üblicherweise mittels graphischer Eingabehilfsmittel, wodurch in der Regel viel Zeit bei der Klassifikation verloren geht. Ferner ist es möglich, dass bei einer manuellen Eingabe vorhandene Informationen übersehen oder nicht hinreichend genau eingegeben werden.

EP 0 654 676 B1 zeigt ein Verfahren zum Bestimmen einer oder mehrerer Grundfrequenzen und/oder ihrer harmonischen im Frequenzspektrum eines Empfangssignals einer akustischen Ortungsanlage. Anhand von drei Frequenzlinien mit den größten Amplitudenwerten und ihren Differenzen werden Grundfrequenzen bestimmt. Um eine Aussage über die Qualität der Bestimmung zu erhalten, werden diese Grundfrequenzen, die Abweichungen der Differenzen von den Grundfrequenzen, die Abweichungen der Frequenzen von Harmonischen der Grundfrequenzen sowie Amplitudenwerte als linguistische Variablen und Zugehörigkeitsfunktionen bewertet und in einer Fuzzy-Regelbasis nach vorgebbaren Regeln miteinander verknüpft Es werden hier jedoch lediglich drei Frequenzlinien berücksichtigt. Frequenzlinien mit geringerer Amplitudengröße werden ebenso wenig erfasst, wie evtl. vorhandene Einzellinien innerhalb des Frequenzspektrums.

In MELVIN J HINICH: "Detecting a Hidden Periodic Signal When Its Period is Unknown", IEEE Transactions on Acoustics, Speech and Signal Processing, IEEE Inc. New York, USA, Bd. ASSP-30, Nr. 5, 1. Oktober 1982 (1982-10-01), Seiten 747-750, XP001422207, ISSN: 0096-3518, wird ein Verfahren zur Detektion eines unbekannten periodischen Signals aus additivem Rauschen offenbart. Mittels eines U-Boot Sonar Systems erfolgt die Detektion eines Torpedos anhand des von den Propellerbewegungen ausgehenden akustischen Linienspektrums.

GLOZA ET AL: "Identification Methods of Underwater Noise Sources Generated by Small Ships", ACTA PHYSICA POLONICA A, Bd. 119, 1. Januar 2011 (2011-01-01), Seiten 961-965, XP055039959, offenbart ein Verfahren zur Lokalisierung und Identifizierung von durch Schiffen hervorgerufenen hydroakustischen Geräuschquellen in Gewässern.
In KUEHNLE L: "CLASSIFICATION AND IDENTIFICATION - CAI - BY SUBMARINE SONARS", Naval Forces, MLONCH, Farnborough, GB, 1. Januar 1987 (1987-01-01), XP001149484, ISSN: 0722-8880, wird ein Verfahren zum Klassifizieren und Identifizieren von Wasserfahrzeugen mittels U-Boot-Sonaren offenbart.

Da mit dem erstgenannten Verfahren lediglich einzelne Grundfrequenzen bestimmt werden können, ist es nicht möglich einen kompletten Frequenzliniensatz bzw. ein komplettes Frequenzlinienmuster zu erfassen. Ferner werden mittels dieses Verfahrens keine Dubletten unter den Frequenzlinien bestimmt, welche möglicherweise einen Hinweis auf mehrere antreibende Propeller liefern.
Der Erfindung liegt das Problem zugrunde, ein Verfahren zu schaffen, welches automatisch, d.h. ohne Bedienhilfe, ein möglichst komplettes Frequenzlinienmuster innerhalb wenigstens eines Amplitudenspektrums erkennt. Dabei setzt sich ein zielbezogenes Frequenzlinienmuster aus einem oder mehreren zugehörigen endgültigen Frequenzliniensätzen und evtl. vorhandenen Einzellinien zusammen.

Die Erfindung löst dieses Problem durch die Merkmale eines Verfahrens zum Bestimmen eines Frequenzlinienmusters gemäß Anspruch 1 sowie eine entsprechende Vorrichtung zum Ausführen des Verfahrens mit den Merkmalen des Anspruchs 15.

Um ein Fahrzeug, insbesondere ein Wasserfahrzeug, zu detektieren und zu klassifizieren, wird dessen abgestrahltes Betriebsgeräusch zusammen mit Umgebungsrauschen mittels einer Sonaranlage als Empfangssignal empfangen. Anschließend wird dieses Empfangssignal in wenigstens ein Frequenzspektrum transformiert, um zur Auswertung eine entsprechende Darstellung als Funktion der Frequenz zu erzeugen, wobei sich das Frequenzspektrum üblicherweise aus seinem Betrag, dem Amplitudenspektrum, und seiner Phase, dem Phasenspektrum, zusammensetzt.

Das Amplitudenspektrum weist aufgrund von Turbinen, Getriebe, Generatoren, Pumpen etc., aus dem allgemeinen Rauschen herausragende Frequenzlinien auf. Dabei ist eine Frequenzlinie eine Frequenz oder ein kleiner Frequenzbereich, welcher sich entsprechend einer vorgegebenen Frequenzauflösung über mehrere Frequenzzellen erstreckt.

Entsprechend dem erfindungsgemäßen Verfahren werden in einem Vorverarbeitungsmodul Frequenzlinien innerhalb des Amplitudenspektrums sortiert. Die Sortierung erfolgt dabei anhand der zugehörigen Amplitudengrößen der Frequenzlinien. Es werden die Frequenzlinien nämlich bevorzugt absteigend sortiert nach ihrer Amplitudengröße in einer Liste abgelegt, wobei die Liste mit derjenigen Frequenzlinie beginnt, welche eine maximale Amplitude aufweist. Besitzen mehr als eine Frequenzlinie die gleiche Amplitudengröße, so wird diejenige Frequenzlinie zuerst in der Liste abgelegt, welche die kleinere Frequenz aufweist. Ferner wird in dem Verarbeitungsmodul den Frequenzlinien entsprechend der Sortierung eine Rangfolge zugewiesen.

In einem weiteren Schritt des erfindungsgemäßen Verfahrens werden in einem Modul zur Parametrisierung und Linienauswahi eine vorbestimmte Anzahl der sortierten Frequenzlinien ausgewählt. Die Anzahl der ausgewählten Frequenzlinien wird begrenzt, um vorteilhaft zu vermeiden, dass mittels des erfindungsgemäßen Verfahrens auch zufällige Frequenzliniensätze erkannt werden.

Ferner werden mehrere Schwellenwerte festgelegt. Mit Hilfe der Schwellenwerte, werden vorteilhaft eine Rauschunterdrückung vorgenommen wie auch besonders starke Frequenzlinien ausgewählt. Dabei werden die Schwellenwerte derart festgelegt, dass bei einer visuellen Darstellung, insbesondere einer Wasserfalldarstellung, hinreichend viele Frequenzlinien erkannt werden und somit die einem Bediener visuell auffallenden Amplituden auch alle erfasst werden.

Die unter Berücksichtigung mindestens eines Schwellenwertes ausgewählten Frequenzlinien werden miteinander verglichen, um sog. Linienpaare zu bilden.

In einem weiteren Schritt des erfindungsgemäßen Verfahrens werden in einem Modul zum Ermitteln von vorläufigen Frequenzliniensätzen diejenigen Linienpaare zusammengefasst, welche eine annähernd gleiche Grundfrequenz aufweisen. Diese zusammengefassten Linienpaare bilden einen vorläufigen Frequenzliniensatz. Dabei bezeichnet ein Frequenzliniensatz eine Menge von Frequenzlinien, welche einen im Wesentlichen konstanten Frequenzabstand aufweisen. Liegt eine Folge von Frequenzlinien mit annähernd konstanten Frequenzabständen vor, so handelt es sich um einen endgültigen Frequenzliniensatz. Ein Frequenzliniensatz liegt jedoch auch dann vor, wenn einige Frequenzlinien innerhalb der Anordnung nicht vorhanden sind.

Weist ein vorläufiger Frequenzliniensatz besondere Merkmale, wie bspw. eine hohe Anzahl an Frequenzlinien, eine regelmäßige Struktur und/oder eine hohe Anzahl starker Frequenzlinien, auf und lässt sich dieser vorläufige Frequenzliniensatz nicht von anderen zuvor bestimmten endgültigen Frequenzliniensätzen ableiten, bspw. durch ein Vielfaches der Grundfrequenz, so handelt es sich bei dem vorläufigen Frequenzliniensatz um einen endgültigen Frequenzliniensatz.

Zu dem vorläufigen Frequenzliniensatz wird eine Parameterliste mit einer Mehrzahl an Parametern abgelegt, die verschiedene Informationen über den vorläufigen Frequenzliniensatz beinhalten. Anhand dieser Parameter erfolgt anschließend eine Bewertung des vorläufigen Frequenzliniensatzes.

In einem anschließenden Ausschlussverfahren werden in einem Modul zum Ermitteln von endgültigen Frequenzliniensätzen aus den vorläufigen Frequenzliniensätzen endgültige Frequenzliniensätze bestimmt. Dazu werden vorläufige Frequenzliniensätze mit einer geringen Bewertung sowie vorläufige Frequenzliniensätze, deren Grundfrequenz ein Mehrfaches oder eine Teilfrequenz einer Grundfrequenz eines vorbestimmten endgültigen Frequenzliniensatzes ist, verworfen.

Für den Fall, dass Einzellinien im Amplitudenspektrum erkannt wurden, werden diese zusammen mit den endgültigen Frequenzliniensätzen eines Zieles in einem Frequenzlinienmustermodul zu einem möglichst vollständigen zielbezogenen Frequenzlinienmuster erfasst.

Das Frequenzlinienmuster eines detektierten Objekts beinhaltet dabei diejenigen Frequenzlinien, welche in einer harmonischen Relation zueinander stehen, d.h. deren Frequenzen ein Mehrfaches einer Grundfrequenz bilden. Derartige Frequenzlinien werden in einem endgültigen Frequenzliniensatz erfasst. Dabei kann es zu einem detektierten Objekt mehrere endgültige Frequenzliniensätze geben. Ferner beinhaltet das Frequenzlinienmuster evtl. vorhandene Einzellinien.

Aus dem ausgegebenen Frequenzlinienmuster können vorteilhaft Merkmale einer Geräuschquelle abgeleitet werden. Zu jedem gefundenen Frequenzlinienmuster werden charakteristische Parameter, insbesondere Grundfrequenz, Blattzahl, besonders auffällige Frequenzlinien, Gütebewertung, etc., ausgegeben.

Anhand dieser Parameter kann bereits vorteilhaft eine Grob-Klassifizierung eines detektierten Fahrzeugs erfolgen.

Die automatische Bestimmung der Frequenzlinienmuster ermöglicht vorteilhaft die Durchführung einer automatischen Geräusch-Klassifizierung. Somit eignet sich das erfindungsgemäße Verfahren besonders für einen Einsatz bei der automatischen Klassifizierung. Das erfindungsgemäße Verfahren dient darüber hinaus der Entlastung des Bedieners, da eine automatische Grob-Klassifizierung anhand der ausgegebenen Frequenzlinienmuster mit ihren Parametern erfolgen kann, die der Bediener ggf. "nachklassifizieren" kann.

In einer bevorzugten Ausführungsform der Erfindung werden die Linienpaare von Frequenzlinien mit einer hinreichend hohen Amplitude verglichen und geprüft, ob sie harmonisch sind. Es werden Linienpaare mit einer zugehörigen Grundfrequenz aus einer ersten Frequenzlinie und einer zweiten Frequenzlinie gebildet, wobei die erste zu vergleichende Frequenzlinie eine Frequenz größer als die Frequenz der zweiten zu vergleichenden Frequenzlinie aufweist.

Ein Linienpaar gilt als harmonisch, wenn entweder die Frequenz der ersten Frequenzlinie ein Mehrfaches der Frequenz der zweiten Frequenzlinie ist oder die Frequenzen der beiden zu vergleichenden Frequenzlinien ein Mehrfaches des Betrags der Frequenzdifferenz der beiden Frequenzen der zu vergleichenden Frequenzlinien ist. Trifft ersteres zu, so gilt die Frequenz der zweiten Frequenzlinie als Grundfrequenz des Linienpaares. Trifft die zweite Bedingung zu, so gilt die Frequenzdifferenz als Grundfrequenz des Linienpaares.

In einer weiteren bevorzugten Ausführungsform der Erfindung wird das Frequenzspektrum mittels einer DEMON (Detection of Envelope Modulation on Noise)-Analyse oder einer LOFAR (Low Frequency Analysis and Recording)-Analyse ermittelt. Bei der LOFAR-Analyse wird ein Frequenzspektrum bzw. Amplitudenspektrum eines von einem Fahrzeug abgestrahlten Betriebsgeräusches erzeugt, bei dem Frequenzlinien im niederfrequenten Bereich aus dem allgemeinen Rauschen herausragen. Da diese Frequenzlinien durch die Antriebssysteme und sonstige Maschinen an Bord des Fahrzeugs verursacht werden, ist dieser niederfrequente Bereich vorteilhaft gut geeignet, um Fahrzeuge zu detektieren und zu klassifizieren.

Bei der DEMON-Analyse wird der hochfrequente Anteil des empfangenen Geräusches des detektierten Fahrzeugs über einen Bandpass und einen Hüllkurvendemodulator demoduliert. Das daraus erzeugte Frequenzspektrum bzw. Amplitudenspektrum liefert Auskunft über die Anzahl der antreibenden Propeller, ihre Blattzahl und die Drehzahl, aus denen dann auf den Fahrzeugtyp geschlossen werden kann.

Bevorzugt wird das aus dem Frequenzspektrum durch Betragsbildung abgeleitete Amplitudenspektrum normiert. So werden die Frequenzamplituden im gesamten Frequenzbereich angeglichen und zur Bestimmung des Frequenzlinienmusters ausschließlich relative Maxima betrachtet. Das hat den Vorteil, dass das Amplitudenspektrum unabhängig ist von der Entfernung des detektierten Fahrzeugs bzw. der Lautstärke des von ihm abgestrahlten Betriebsgeräusches.

Ferner wird das Frequenzspektrum bzw. das Amplitudenspektrum über einen vorbestimmten Zeitraum gemittelt. Das dient zum Einen der Rauschunterdrückung und zum Anderen der Darstellung von verlässlichen Frequenzlinien über die Zeit.

Die Frequenzanalyse erfolgt in vorbestimmten Zeitintervallen. Es lassen sich somit sog. LOFARgramme bzw. DEMONgramme erstellen, bei denen auftretende Spektrallinien das detektierte Fahrzeug kennzeichnen. Bei einer derartigen Darstellung verlaufen die Zeitachse vertikal und die Frequenzachse horizontal. Durch eine geeignete Mittelung der Amplitudenspektren über einen Zeitabschnitt, werden auch diejenigen Frequenzlinien erfasst, die nicht bei jeder Frequenzanalyse auftreten, denn bspw. Umwelteinflüsse können zeitweise einzelne Frequenzen im empfangenen Geräusch unterdrücken.

Mittels des bevorzugten Verfahrens bzw. der bevorzugten Vorrichtung können sowohl das DEMON-Spektrum als auch das LOFAR-Spektrum bei der Durchführung berücksichtigt werden. Anhand des LOFAR-Spektrums sowie des DEMON-Spektrums werden jeweils ein oder mehrere Frequenzliniensätze ermittelt. Ergänzend werden aus dem LOFAR-Spektrum evtl. vorhandene Einzellinien ermittelt. Für eine anschließende Klassifizierung können die Frequenzliniensätze aus dem DEMON- und LOFAR-Spektrum sowie die evtl. Einzellinien zu einem Frequenzlinienmuster miteinander kombiniert werden, um zielbezogene Geräuschemerkmale abzuleiten.

In einer weiteren bevorzugten Ausführungsform der Erfindung werden die Schwellenwerte in einem Modul zur Parametrisierung und Linienauswahl dynamisch festgelegt, wobei alle Schwellenwerte oberhalb eines Wertes für einen Rauschpegel liegen. Grundlage für die Festlegung der Schwellenwerte bilden dabei die zuvor ermittelten maximale Amplitude und die minimale Amplitude der ausgewählten Frequenzlinien. Ein hoher Schwellenwert, hier als "high" bezeichnet, wird so gelegt, dass eine geringe Anzahl der Frequenzlinien der in der Liste abgelegten Frequenzlinien erfasst wird, deren Amplituden am größten sind. Diese Schwelle gibt somit vorteilhaft besonders starke Frequenzlinien im Amplitudenspektrum an.

Ein weiterer möglicher Schwellenwert, hier als "base" bezeichnet, bestimmt diejenigen Frequenzlinien, welche sich signifikant von dem Rauschpegel abheben. Die Erfindung geht davon aus, dass in jedem zu bestimmenden Frequenzlinienmuster einige relativ starke Frequenzlinien enthalten sein müssen, da diese Frequenzlinienmuster sonst auch für einen Bediener manuell nicht erkennbar wären.

Ein weiterer Schwellenwert, hier als "hi" bezeichnet, bestimmt diejenigen Frequenzlinien, die sich nur gering vom Rauschpegel abheben. Das hat den Vorteil, dass auch schwache Frequenzlinien, die zu einem Frequenzlinienmuster zugehörig sind, mit erfasst werden.

Ein weiterer Schwellenwert, hier als "II" bezeichnet, bestimmt diejenigen Frequenzlinien, die als Einzellinien gelten. Handelt es sich bei dem Amplitudenspektrum um ein Spektrum der LOFAR-Analyse, so gibt dieser Schwellenwert "II" mögliche Einzellinien im LOFAR-Spektrum an.

In einer weiteren Ausführungsform der Erfindung berücksichtigen die Parameter des vorläufigen Frequenzliniensatzes die Amplitudenwerte der zu dem vorläufigen Frequenzliniensatz zugehörigen Frequenzlinien sowie die relative Lage der Frequenzlinien zueinander.

Ein weiterer Parameter berücksichtigt bspw. die Anzahl an Frequenzlinien, die den Schwellenwert "high" überschritten haben und somit eine besonders starke Amplitude aufweisen. Frequenzliniensätze mit mehreren hohen Amplituden werden somit auch höher bewertet. Die Lage der Frequenzlinien wird berücksichtigt, indem die Anzahl an Frequenzlinien als Parameter festgelegt wird, welche in einer Sequenz aufeinander folgen, d.h. welche einen Frequenzliniensatz bilden ohne Amplitudenausfall. Ebenso die Liniendichte kann als Parameter berücksichtigt werden.

Ferner wird als Parameter die zu dem vorläufigen Frequenzliniensatz zugehörige Grundfrequenz als gemessene und/oder berechnete Größe berücksichtigt.

Die Erfindung ist jedoch nicht auf die oben aufgeführten Parameter beschränkt. Diese werden aber berücksichtigt. Für das Verfahren sind aber weitere Parameter denkbar, die die Eigenschaften des vorläufigen Frequenzliniensatzes beschreiben und bei der Bewertung des vorläufigen Frequenzliniensatzes verwendet werden können. Ein vorläufiger Frequenzliniensatz stellt somit einen Vektor mit mehreren Parametern dar.

In einer weiteren Ausführungsform der Erfindung werden in einem Einzellinienmodul Frequenzlinien ermittelt, die nach einer Subtraktion der ermittelten endgültigen Frequenzliniensätze aus dem Amplitudenspektrum in dem Amplitudenspektrum noch enthalten sind. Haben diese Frequenzlinien zudem einen vorbestimmten Schwellenwert zum Bestimmen von Einzellinien überschritten, werden diese Frequenzlinien zu Einzellinien bestimmt. Durch die Erfassung derartiger Einzellinien, insbesondere aus dem LOFAR-Spektrum, lässt sich zusammen mit den endgültigen Frequenzliniensätzen vorteilhaft ein vollständiges Frequenzlinienmuster eines detektierten Fremdobjektes erzeugen.

Gemäß einer bevorzugten Ausführungsform der Erfindung werden die ermittelten zu bestimmenden Frequenzlinienmuster des Amplitudenspektrums mittels eines Güteparameters bewertet. Die Güte bzw. der Güteparameter ist dabei abhängig von der Sequenz, der Anzahl und Größe der Amplituden, der Liniendichte und/oder der Grundfrequenz der zugehörigen Frequenzlinien. Dadurch kann vorteilhaft eine Aussage bzgl. einer Ergebniswahrscheinlichkeit getroffen werden. Dem Bediener ist es dann überlassen, ob er weniger zuverlässige Werte zu einer Klassifizierung zulässt.

Gemäß einer weiteren bevorzugten Ausführungsform der Erfindung wird das bevorzugte Verfahren, für den Fall, dass kein Frequenzlinienmuster erkannt wird, mehrmals mit geänderten Parametern, insbesondere mit geänderter Frequenztoleranz und/oder geänderten Schwellenwerten, erneut durchgeführt. Ziel des Verfahrens ist es, möglichst alle Frequenzliniensätze sowie alle vorhandenen Einzellinien zu erkennen, die für einen Bediener ebenfalls erkennbar sind. Daher werden die oben angegebenen Parameter zunächst sehr eng gesetzt. Wird mit diesen Parametern kein Frequenzlinienmuster erkannt, wird eine höhere Parametertoleranz vorgegeben.

Ferner können Situationen bzw. Sonderfälle berücksichtig werden, in denen bspw. ein Bediener visuell ein Frequenzlinienmuster erkennen würde, obwohl das bevorzugte Verfahren kein Frequenzlinienmuster als Ergebnis liefert. Bei einer erneuten Durchführung des Verfahrens werden vor der Ermittlung des vorläufigen Frequenzliniensatzes diese Situationen bzw. Sonderfälle und/oder weitere manuelle vom Bediener eingegebene Vorgaben berücksichtigt. Das hat den Vorteil, dass auch unregelmäßige Frequenzliniensätze, die nur sehr wenige Frequenzlinien beinhalten aber aufgrund der Amplitude und der Struktur für einen Bediener erkennbar sind, automatisch gefunden werden.

In einer weiteren bevorzugten Ausführungsform der Erfindung werden vorhandene Eigenbootgeräusche bei der Durchführung des bevorzugten Verfahrens berücksichtigt. Es werden vorteilhaft diejenigen Frequenzlinien in dem Amplitudenspektrum, welche aufgrund der Eigenbootgeräusche entstehen, nicht im Verfahren berücksichtigt. Das hat den Vorteil, evtl. auftretende Eigengeräusch-Frequenzlinien nicht fälschlicherweise als Einzellinien aufzufassen. Somit werden vorteilhaft Störungen im Frequenzlinienmuster vermieden.

In einer weiteren bevorzugten Ausführungsform der Erfindung wird für den Fall, dass zwei oder mehr Frequenzlinien eines Frequenzliniensatzes benachbarte Frequenzlinien mit einer geringen Frequenzdifferenz existieren, ein zusätzliches Merkmal zu diesen Frequenzlinien festgehalten. Mit diesem Merkmal wird bspw. ein Vorhandensein von Dubletten unter den Frequenzlinien gekennzeichnet. Im Rahmen einer Klassifizierung kann daraus vorteilhaft auf ein Schiff bspw. mit zwei Propellern und/oder zwei Maschinen geschlossen werden.

Gemäß einer weiteren bevorzugten Ausführungsform der Erfindung werden zu den ermittelten Frequenzlinienmustern zugehörige Parameter, insbesondere Propellerinformationen, Maschineninformationen und/oder Getriebeinformationen, als Ergebnis ausgegeben. Diese Parameter sind notwendig für folgende Klassifizierungsverfahren. Durch eine Ausgabe zusammen mit dem Frequenzlinienmuster wird vorteilhaft eine automatische Klassifizierung möglich.

In einer weiteren bevorzugten Ausführungsform der Erfindung werden die ermittelten Frequenzlinienmuster zeitlich bewertet. Dazu werden die bisher gefundenen endgültigen Frequenzliniensätze, die dem Frequenzlinienmuster zugehörig sind, zunächst mit dem neuen Amplitudenspektrum verglichen. Eine Übereinstimmung des Frequenzliniensatzes mit dem Amplitudenspektrum führt dann verteilhaft zu einer höheren Bewertung des zugehörigen Frequenzlinienmusters.

Die Verwendung einer Historie von Ergebnissen hat somit den Vorteil einer Glättung von Frequenzlinienmustern, die in einzelnen Zeitperioden ermittelt wurden.

In einer weiteren bevorzugten Ausführungsform der Erfindung weist das Frequenzspektrum bzw. das Amplitudenspektrum ein detektiertes Fremdobjekt aus einer Peilrichtung auf oder erstreckt sich über einen größeren Peilungsbereich, in dem mehrere Fremdobjekte vorhanden sein können. Der Vorteil einer Abdeckung eines größeren Peilungsbereichs liegt darin, dass das Verfahren im Hintergrund laufen kann, um als Systemunterstützung zu arbeiten. Bei einer entsprechenden Erkennung eines Frequenzlinienmusters kann das Verfahren bspw. dem Bediener zeitnah eine Grob-Klassifizierung liefern oder Meldung von neuen Linien oder evtl. Drehzahländerungen geben.

Gemäß einer weiteren bevorzugten Ausführungsform der Erfindung werden zur Bestimmung der endgültigen Frequenzliniensätze mittels des Ausschlussverfahrens diejenigen Frequenzliniensätze aussortiert, deren Grundfrequenzen annähernd ein Mehrfaches der Grundfrequenz des zuvor bestimmten vorläufigen Frequenzliniensatzes mit einer höheren Bewertung betragen. Ferner werden diejenigen Frequenzliniensätze aussortiert, deren Grundfrequenz annähernd einer Teilfrequenz des zuvor bestimmten vorläufigen Frequenzliniensatzes entspricht. Anschließend wird der vorläufige Frequenzliniensatz mit der nächstbesten Bewertung dem Ausschlussverfahren zugrunde gelegt. Auf diese Weise werden vorteilhaft alle abgeleiteten Frequenzliniensätze aussortiert, da sie Teilmengen eines Frequenzliniensatzes bilden.

Gemäß einer alternativen Ausführungsform der Erfindung weist die erfindungsgemäße Vorrichtung ein oder mehrere Mittel zum Durchführen der vorstehend beschriebenen Verfahrensschritte auf.

Weitere vorteilhafte Ausführungsformen der Erfindung ergeben sich aus den Unteransprüchen sowie aus den anhand der anliegenden Zeichnung näher erläuterten Ausführungsbeispielen. In der Zeichnung zeigen:
- Fig. 1: eine schematische Darstellung eines Ablaufdiagramms des erfindungsgemäßen Verfahrens,
- Fig. 2: eine beispielhafte Darstellung eines DEMON-Spektrums und
- Fig. 3: eine beispielhafte Darstellung eines LOFAR-Spektrums.

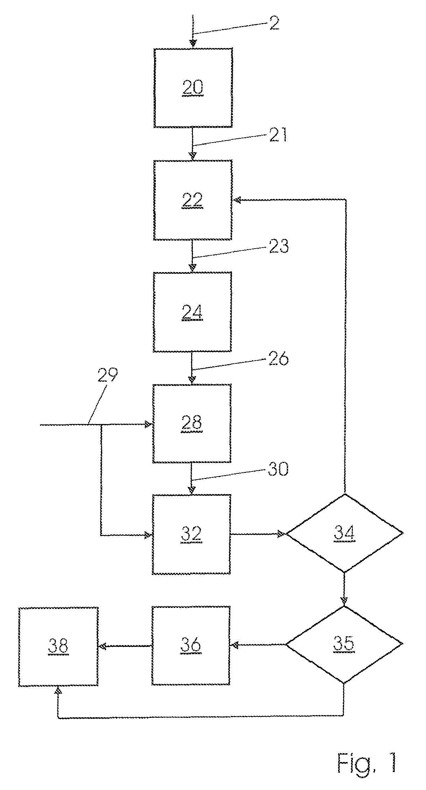

Fig. 1 zeigt eine schematische Darstellung eines Ablaufdiagramms zur Erläuterung eines Ausführungsbeispiels des erfindungsgemäßen Verfahrens. Es wird in diesem Ausführungsbeispiel vorausgesetzt, dass ein Fremdobjekt, insbesondere ein Fremdschiff, detektiert wurde und aus den Empfangssignalen einer Sonaranlage der von diesem Objekt abgestrahlten Geräusche wenigstens ein richtungsbezogenes bzw. zielbezogenes Frequenzspektrum vorliegt.

Das Frequenzspektrum des Empfangssignals der Sonaraniage lässt sich aus dem Empfangssignal durch Anwendung bspw. einer Fourier-Transformation berechnen und setzt sich aus dem Betrag, nachfolgend als Amplitudenspektrum bezeichnet, und der Phase, auch Phasenspektrum genannt, zusammen. Der Einfachheit halber wird im weiteren Verlauf der Beschreibung unter dem Spektrum eines Empfangssignals das Amplitudenspektrum des Empfangssignals oder ein aus dem Amplitudenspektrum abgeleitetes Spektrum verstanden.

Für die Durchführung des erfindungsgemäßen Verfahrens wird ferner vorausgesetzt, dass Eingangsdaten 2 in Form eines aus einer DEMON-Analyse resultierenden DEMON-Spektrums und/oder eines aus einer LOFAR-Analyse resultierenden LOFAR-Spektrums, vorliegen. Dabei werden bevorzugt normierte Spektren als Eingangsdaten 2 verwendet, so dass insbesondere bei dem LOFAR-Spektrum die Frequenzamplituden bzw. die Frequenzpegel im gesamten Frequenzbereich angeglichen sind. Ferner werden die Spektren über die Zeit integriert, so dass eine bessere Rauschunterdrückung erzielt wird. Dabei kann der Integrationszeitraum manuell vom Bediener festgelegt werden oder im Voraus in dem Verfahren implementiert sein. Bevorzugt werden für die Durchführung des erfindungsgemäßen Verfahrens für jedes detektierte Objekt jeweils ein DEMON-Spektrum und ein LOFAR-Spektrum angenommen, um ein möglichst vollständiges Frequenzlinienmuster zu erhalten. Sind jedoch mehrere LOFAR-Spektren verfügbar, werden diese entsprechend zusammengefasst.

Es wird ferner angenommen, dass zusätzlich zu den Frequenzlinien des Fremdobjektes auch Eigenfrequenzlinien auftreten, die aufgrund von Geräuschquellen des Eigenbootes im Spektrum, insbesondere im LOFAR-Spektrum, auftreten. Diese Eigenfrequenzlinien werden in den erfindungsgemäßen Verfahren berücksichtigt.

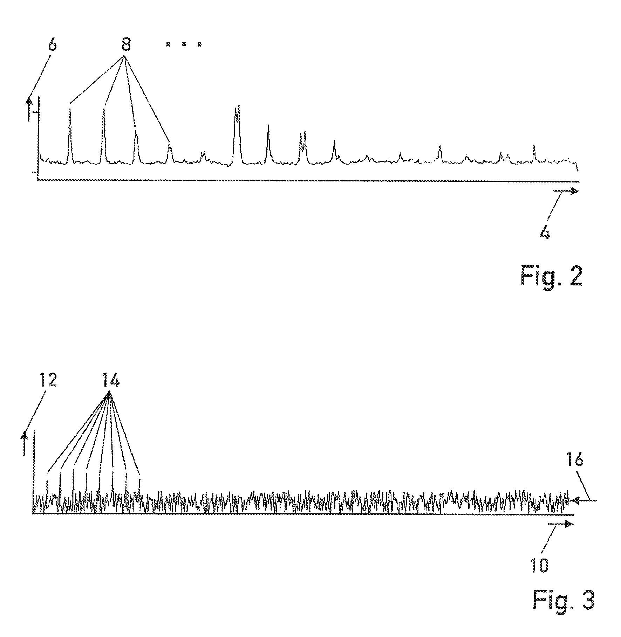

Fig. 2 zeigt eine Darstellung eines beispielhaften DEMON-Spektrums. Das Spektrum ist über eine Frequenz auf einer horizontalen Achse 4 aufgetragen. Die zugehörigen normierten Frequenzamplituden sind auf einer vertikalen Achse 6 dargestellt. Es sind in diesem beispielhaften DEMON-Spektrum mehrere signifikante Frequenzlinien 8 erkennbar, aus denen ein Frequenzliniensatz bzgl. einer Grundfrequenz und/oder einer Blattfrequenz eines Propellers abgeleitet werden kann.

Fig. 3 zeigt eine Darstellung eines beispielhaften LOFAR-Spektrums. Das Spektrum ist hier ebenfalls über eine Frequenz über eine horizontale Achse 10 aufgetragen. Die vertikale Achse 12 gibt die Werte für normierte Frequenzamplituden bzw. Frequenzpegel an. Auch in diesem Ausführungsbeispiel sind mehrere signifikante Frequenzlinien 14 erkennbar, welche aus dem allgemeinen Rauschpegel 16 hinausragen. Anhand des LOFAR-Spektrums lassen sich Geräuschquellen, wie Dieselmotor, Turbinen, Generatoren, Pumpen und/oder Lüfter, bestimmen.

Gemäß Fig. 1 werden die Amplitudenwerte des DEMON- oder des LOFAR-Spektrums als Eingangsdaten 2 einem Vorverarbeitungsmodul 20 übergeben. Es werden ausschließlich Maxima des DEMON- oder LOFAR-Spektrums, wie es in Fig. 2 oder Fig. 3 dargestellt ist, betrachtet. In dem Vorverarbeitungsmodul 20 wird den Frequenzlinien absteigend sortiert nach ihrer Amplitudengröße eine entsprechende Rangfolge zugewiesen. Die Rangfolgeliste und die Amplituden-werte 21 bilden die Grundlage für eine Festlegung von Schwellenwerten in einem Modul zur Parametrisierung und Linienauswahl 22.

Ferner erfolgt in dem Vorverarbeitungsmodul 20 eine erste Grobschätzung, um Sonderfälle zu erfassen. Es handelt sich bei diesen Sonderfällen bspw. um Fälle, in denen eine der stärksten Frequenzlinien ein Vielfaches einer anderen starken Frequenzlinie ist und/oder Vielfache dieser Frequenzlinien existieren. Die ermittelten Sonderfälle werden im weiteren Verfahren bei der Auswahl endgültiger Frequenzliniensätze berücksichtigt.

In dem Modul zur Parametrisierung und Linienauswahl 22 werden die Schwellenwerte festgelegt. Es handelt sich dabei um amplitudenabhängige Schwellenwerte, die relativ zu einer minimalen Amplitude oder maximalen Amplitude einer Auswahl zugelassener Frequenzlinien 21 festgelegt werden. Die Anzahl N der auszuwählenden Frequenzlinien ist dabei so zu wählen, dass hinreichend viele Frequenzlinien ausgewählt werden, damit alle Frequenzliniensätze und evtl. vorhandene Einzellinien bei Verwendung eines LOFAR-Spektrums erfasst werden, aber eine Erkennung von Zufallsfrequenzmustern vermieden wird. Dabei kann die Anzahl N der auszuwählenden Frequenzlinien separat jeweils für das DEMON-Spektrum und das LOFAR-Spektrum fest vorgegeben sein oder manuell vom Bediener festgelegt werden.

In Fig. 2 sind die ersten neun Frequenzlinien 8 dargestellt. Diese werden entsprechend dem erfindungsgemäßen Verfahren mit einer zugehörigen Rangfolge 1 bis 9 entsprechend dem Amplitudenwert versehen.

Die Schwellenwerte werden auf Basis der N zugelassenen Frequenzlinien festgelegt. In diesem Ausführungsbeispiel regelt ein Schwellenwert "base" eine Teilmenge an Frequenzlinien, die zu einem möglichen Frequenzliniensatz gehören. Ein weiterer Schwellenwert "hi" regelt eine Teilmenge an Frequenzlinien, die bei der Suche nach Frequenzliniensätzen zunächst zugelassen sind und ist kleiner als der Schwellenwert "base". Ein weiterer maximaler Schwellenwert legt bei Verwendung eines DEMON-Spektrums anhand der maximalen Amplitude eine geringe Anzahl an Frequenzlinien im DEMON-Spektrum fest, die die größten Amplitudenwerte aufweisen, und wird hier als "high" bezeichnet. Handelt es sich bei den Eingangsdaten 2 um Amplitudenwerte eines LOFAR-Spektrums, so gibt es einen gesonderten Schwellenwert, hier als "II" bezeichnet, zur Auswahl von möglichen LOFAR-Einzellinien, die zu keinem endgültigen Frequenzliniensatz gehören.

Diejenigen Frequenzlinien 23, die aufgrund des Schwellenwertes "base" für die Suche nach Frequenzliniensätzen zugelassen wurden, werden einem Differenz-Matrix-Modul 24 übergeben. Es werden bevorzugt die Frequenzlinien nach ihrer Frequenz absteigend sortiert.

Das Differenz-Matrix-Modul 24 dient zum Ermitteln von harmonischen Linienpaaren. Dazu werden alle zugelassenen Frequenzlinien 23 eines Spektrums miteinander verglichen und geprüft, ob die Linienpaare harmonisch sind. Wenn die Frequenzlinien 23 harmonisch zueinander sind, werden sie mit ihrer zugehörigen Grundfrequenz in einer Differenz-Matrix 26 abgelegt.

Eine harmonische Relation zwischen Frequenzlinien liegt dann vor, wenn die Frequenz der ersten Frequenzlinie ein Mehrfaches der Frequenz der zweiten Frequenzlinie ist oder die Frequenzen der beiden zu vergleichenden Frequenzlinien ein Mehrfaches des Betrags der Frequenzdifferenz der beiden Frequenzlinien ist. Dabei ist die Frequenz der ersten zu vergleichenden Frequenzlinie größer als die Frequenz der zweiten zu vergleichenden Frequenzlinie. Somit wird sichergestellt, dass jeder erkennbare Frequenzliniensatz zugehörige Linienpaare mit der Grundfrequenz aufweist und in der Differenz-Matrix 26 erfasst wird. Eine wichtige Annahme der Erfindung ist, dass bei jedem zu interessierenden Frequenzliniensatz entweder die Grundfrequenz als eine Frequenzlinie erkennbar ist oder aber wenigstens zwei aufeinander folgende Frequenzlinien zueinander eine harmonische Relation aufweisen.

Bei der Berechnung der Differenz-Matrix 26 werden neben der Grundfrequenz auch Informationen zu möglichen Dubletten unter den Frequenzlinien abgelegt.

Unter Dubletten werden dabei zwei oder mehr benachbarte Frequenzlinien verstanden, die eine sehr geringe Frequenzdifferenz aufweisen. Da derartige Dubletten bspw. bei Schiffen mit zwei Propellern und/oder zwei Maschinen auftreten, ist das Vorhandensein von Dubletten in einem Frequenzliniensatz ein charakteristisches Merkmal des Fahrzeugs und somit relevant für eine nachfolgende Klassifizierung. Erhält ein Linienpaar der Differenz-Matrix 26 den Zusatz "Dublette", so wird dieses Merkmal mit einer zugehörigen Wahrscheinlichkeit in der Differenz-Matrix 26 abgelegt. Enthält dann ein Frequenzliniensatz mehrere Frequenzlinien mit dem Merkmal "Dublette", so erhöht sich die Wahrscheinlichkeit entsprechend.

Anhand der Differenz-Matrix 26 lassen sich in einem Modul 28 zum Ermitteln von vorläufigen Frequenzliniensätzen diejenigen Frequenzlinien, die im Wesentlichen die gleiche Grundfrequenz aufweisen, zu einem vorläufigen Frequenzliniensatz zusammenfassen. Ein vorläufiger Frequenzliniensatz weist dabei wenigstens zwei Linienpaare auf, die einen annähernd gleichen Frequenzabstand aufweisen. Existieren lediglich zwei Frequenzlinien und sind diese harmonisch, so kann dieses Linienpaar ebenfalls einen Frequenzliniensatz bilden.

In dem Modul 28 zum Ermitteln von vorläufigen Frequenzliniensätzen werden ferner die vorläufigen Frequenzliniensätze bewertet. Dazu werden aus einer Menge von Parametern diejenigen Parameter, die für eine Bewertung der vorläufigen Frequenzliniensätze herangezogen werden, festgelegt. Die Festlegung dieser Parameter kann über eine manuelle Vorgabe 29 durch Bedienereingriff erfolgen oder fest im Verfahren implementiert sein. Mögliche Parameter können eine berechnete und/oder gemessene Grundfrequenz sein, die Lage der ersten enthaltenen Frequenzlinie, die Anzahl der in dem vorläufigen Frequenzliniensatz enthaltenen Frequenzlinien, die Anzahl an Frequenzlinien, deren Amplitudenwert die Schwelle "high" überschritten haben oder einen Wert für die Liniendichte darstellen. Die Erfindung berücksichtigt die vorstehenden Parameter, ist jedoch nicht auf diese Parameter beschränkt. Vielmehr sind jedwede Parameter denkbar, die eine Bewertung der vorläufigen Frequenzliniensätze ermöglichen. Die Bewertung ist somit abhängig von der Anzahl der enthaltenen Frequenzlinien, der Folge der Frequenzlinien, der Anzahl der starken Frequenzlinien sowie einem Wert bzgl. der Liniendichte. Anhand der festgelegten Parameter wird zu jedem vorläufigen Frequenzliniensatz ein zugehöriger Bewertungsfaktor ermittelt. So erhalten bspw. vorläufige Frequenzliniensätze mit einer hohen Sequenz und einer hohen Anzahl an Frequenzlinien mit einer großen Amplitude auch einen hohen Bewertungsfaktor.

Gemäß Fig. 1 erfolgt die Bestimmung des endgültigen Frequenzliniensatzes bzw. der endgültigen Frequenzliniensätze in einem entsprechenden Modul 32 zum Ermitteln von endgültigen Frequenzliniensätzen.

Dazu werden die vorläufigen Frequenzliniensätze mit den zugehörigen Bewertungsfaktoren 30 dem Modul 32 übergeben. Dort wird zunächst geprüft, ob manuelle Vorgaben oder Ergebnisse der Grobschätzung aus dem Vorverarbeitungsmodul 20 vorliegen. Diese werden berücksichtigt und vorläufige Frequenzliniensätze, die den manuellen Vorgaben sowie relativ sicheren Ergebnissen der Grobschätzung entsprechen, bevorzugt behandelt.

Anschließend werden die vorläufigen Frequenzliniensätze anhand ihrer Bewertungsfaktoren sortiert. Dabei können auch Minimalanforderungen bzw. Maximalanforderungen berücksichtigt werden. Bspw. kann eine Minimalanzahl an Frequenzlinien, eine Minimalanzahl an aufeinander folgenden Frequenzlinien und/oder eine minimale Grundfrequenz und/oder eine maximale Grundfrequenz berücksichtigt werden, die dann bereits zur Ausscheidung einzelner vorläufiger Frequenzliniensätze führen können.

Es wird mittels eines Ausschlussverfahrens geprüft, ob mehrere vorläufige Frequenzliniensätze zu einem endgültigen Frequenzliniensatz gehören, d.h. ob es sich um abgeleitete Frequenzliniensätze mit einem Vielfachen der Grundfrequenz handelt. Dazu wird zunächst der vorläufige Frequenzliniensatz mit der maximalen Bewertungsgröße bestimmt. Alle vorläufigen Frequenzliniensätze, deren Grundfrequenz ein Mehrfaches der Grundfrequenz des vorläufigen Frequenzliniensatzes mit der maximalen Bewertungsgröße beträgt, werden von dem Ausschlussverfahren aussortiert.

In einem nächsten Schritt wird der nächste vorläufige Frequenzliniensatz bestimmt mit der nächstbesten Bewertungsgröße. Dann werden wieder alle vorläufigen Frequenzliniensätze verworfen, deren Grundfrequenz ein Mehrfaches der Grundfrequenz des bestimmten Frequenzliniensatzes ist. Auf diese Weise wird eine Liste erstellt mit relevanten vorläufigen Frequenzliniensätzen. Bevorzugt ist diese Liste auf einige wenige Sätze beschränkt.

Zum Ermitteln der endgültigen Frequenzliniensätze werden in dem Modul 32 die Frequenzlinien der relevanten vorläufigen Frequenzliniensätze erneut geprüft, ob alle Frequenzlinien innerhalb des relevanten vorläufigen Frequenzliniensatzes auch wirklich eine Frequenz aufweisen, die annähernd ein Mehrfaches der zu dem Frequenzliniensatz zugehörigen Grundfrequenz ist und eine Amplitude aufweisen, die den Schwellenwert "hi" überschritten hat. Werden diese Bedingungen erfüllt, wird der relevante vorläufige Frequenzliniensatz zu einem endgültigen Frequenzliniensatz erklärt. Zu jedem Frequenzliniensatz werden darüber hinaus charakteristische Parameter, wie bspw. die Grundfrequenz, die Blattzahl und die Anzahl der Antriebswellen, besonders auffällige Frequenzlinien sowie einen Wert für eine Gütebewertung des Ergebnisses bestimmt.

Die Gütebewertung ist dabei abhängig von der Frequenzlinienanzahl, der Anzahl zugehöriger Frequenzlinien mit hoher Amplitude, der Grundfrequenz, der Sequenz und/oder der Frequenzliniendichte. Bevorzugt liegt der Wert für die Gütebewertung in einem Wertebereich von 0,1 bis 1,0, wobei der Wert 1,0 ein sehr sicheres Ergebnis anzeigt der Wert 0,1 ein besonders unsicheres Ergebnis.

Für den Fall, dass kein endgültiger Frequenzliniensatz bestimmt wurde aber signifikante Frequenzlinien vorhanden sind, sieht das erfindungsgemäße Verfahren gemäß Fig. 1 einen Entscheider 34 vor. Wird kein endgültiger Frequenzliniensatz erkannt, werden die Parameter, insbesondere Suchfenster und Schwellenwerte, in dem Modul 22 derart verändert, dass ein größerer Toleranzbereich entsteht und die Suche nach Frequenzliniensätzen entsprechend den vorstehenden Ausführungen erneut durchgeführt. Die Anpassung bzw. Änderung der Parameter zum Auffinden von möglichen Frequenzliniensätzen kann mehrfach erfolgen.

Ferner wird geprüft, ob evtl. Sonderfälle vorliegen, in denen ein Bediener einen Frequenzliniensatz erkennen würde. Das kann bspw. bei Vorliegen eines DEMON-Spektrums der Fall sein, wenn nur eine Frequenzlinie für das Propellerblatt und eine Frequenzlinie der Antriebswelle erkennbar sind. Bei Vorliegen eines LOFAR-Spektrums können ähnliche Sonderfälle auftreten. Neben manueller Vorgaben werden diese Sonderfälle 29 im Modul 32 berücksichtigt. Liegen stark schwankende Frequenzen und Amplituden der Frequenzlinien vor, ist es möglich, die Eingangsdaten 2 für eine erneute Durchführung des Verfahrens zunächst zu filtern. Über einen Zeitraum werden die Frequenzlinien dann mit den vorhergehenden Frequenzlinien verglichen, was im Wesentlichen zu einer Glättung der Amplituden der Frequenzlinien führt. Zusätzlich können im Rahmen dieser Filterung entsprechende Parameter wie z.B. Güte oder Häufigkeit zu den Frequenzlinien abgelegt werden, mit denen höhere Amplituden stärker gewichtet werden als schwache Amplituden.

Falls nach mehrmaligem Durchführen des erfindungsgemäßen Verfahrens keine endgültigen Frequenzliniensätze bestimmt wurden, wird in einem letzten Suchdurchlauf überprüft, ob eine "starke" Frequenzlinie in dem Amplitudenspektrum enthalten ist, deren Frequenz ein Mehrfaches der Frequenz einer anderen "starken" Frequenzlinie ist. Ist dies der Fall, werden diese Frequenzlinien zu einem endgültigen Frequenzliniensatz bestimmt.

Ein weiterer Entscheider 35 innerhalb des beispielhaften Ablaufdiagramms gemäß Fig. 1 prüft, ob es sich bei den Eingangsdaten 2 um ein DEMON-Spektrum oder ein LOFAR-Spektrum handelt. Für den Fall, dass ein LOFAR-Spektrum vorliegt, wird nach Bestimmung der endgültigen Frequenzliniensätze und Aussortieren der entsprechenden Frequenzlinien im LOFAR-Spektrum über ein Einzellinienmodul 36 das LOFAR-Spektrum nach evtl. vorhandenen Einzellinien hin überprüft.

Dazu werden diejenigen Frequenzlinien herausgesucht, deren Amplituden einen Schwellenwert "II" überschritten haben, welcher deutlich über dem Schwellenwert liegt, welcher die Frequenzlinien kennzeichnet, die zu einem möglichen Frequenzliniensatz gehören. LOFAR-Einzellinien, mit einer relativ hohen Amplitude, die keinem endgültigen Frequenzliniensatz zugeordnet werden, werden somit als Einzellinien angenommen. Diese Einzellinien werden zusammen mit den ermittelten endgültigen Frequenziiniensätzen einem Frequenzlinienmustermodul 38 übergeben, um ein entsprechendes zielbezogenes Frequenzlinienmuster zu bestimmen.

Für den Fall, dass es sich bei den Eingangsdaten 2 um ein DEMON-Spektrum handelt, werden die ermittelten endgültigen Frequenzliniensätze direkt von dem Entscheider 35 dem Frequenzlinienmustermodul 38 übergeben.

In dem Frequenzlinienmustermodul 38 werden die endgültigen Frequenzliniensätze des DEMON-Spektrums sowie die endgültigen Frequenzliniensätze und die Einzellinien des LOFAR-Spektrums über die Zeit erfasst und zu einem Frequenzlinienmuster zusammengefasst, um Informationen über die möglichen Antriebsgeräte eines oder mehrerer Fahrzeuge zu gewinnen. Dabei werden die Frequenzliniensätze bzw. Frequenzlinienmuster zeitlich bewertet, d.h. bisher gefundene Frequenzliniensätze werden zunächst mit den neuen Spektren verglichen. Alle Frequenzlinienmuster und/oder Frequenzliniensätze werden mit einem Wert für eine Gütebewertung versehen. Somit kommen alle Frequenzlinienmuster, die sich über die Zeit bestätigen oder hinreichend ausgeprägt sind als Ergebnis zur Anzeige und werden in einer Historie gespeichert.

Mit dem erfindungsgemäßen Verfahren können vorteilhaft mehrere endgültige Frequenzliniensätze gefunden werden. Dadurch sind bspw. bei einem DEMON-Spektrum auch Geräusche von mehreren Propellern erfassbar, die z.B. von einem Propellerschiff mit zwei Propellern oder einer Zielkreuzung bzw. einem Verband von Schiffen zugeordnet werden können. Ferner können mit dem erfindungsgemäßen Verfahren komplexe Frequenzlinienmuster sowie Einzellinien in einem LOFAR-Spektrum gefunden werden. Dadurch kann das Verfahren vorteilhaft als Bedienerunterstützung bei der Eingabe der Geräuschmerkmale eingesetzt werden. Darüber hinaus ist eine Systemunterstützung durch das Verfahren möglich, indem neue Frequenzlinien und/oder Drehzahländerungen gemeldet werden. Außerdem kann das Verfahren für eine automatische Geräusch-Klassifizierung genutzt werden. Generell ist auch ein Einsatz bei unbemannten Anlagen denkbar.

Wird ein größerer Peilungsbereich für die Durchführung des erfindungsgemäßen Verfahrens gewählt, insbesondere durch Summen-Sonogramme, kommt es evtl. zu Mehrkontakten, d.h. mehrere Fremdobjekte werden innerhalb des Peilungsbereiches detektiert. Das führt zu komplexen Frequenzlinienmustern, da diese dann nicht mehr zielbezogen sind. Bei Verwendung eines DEMON-Spektrums als Eingangsdaten 2 können mittels des Verfahrens vorteilhaft anhand mehrerer endgültiger Frequenzliniensätze diese Mehrkontakt-Situationen aufgelöst werden.

Alle in der vorgenannten Figurenbeschreibung, in den Ansprüchen und in der Beschreibungseinleitung genannten Merkmale sind sowohl einzeln als auch in beliebiger Kombination miteinander einsetzbar. Die Offenbarung der Erfindung ist somit nicht auf die beschriebenen bzw. beanspruchten Merkmalskombinationen beschränkt. Vielmehr sind alle Merkmalskombinationen als offenbart zu betrachten.

## Patentansprüche

1. Verfahren zum Bestimmen eines Frequenzlinienmusters innerhalb wenigstens eines Amplitudenspektrums, welches aus akustischen Signalen, die von wenigstens einem detektierten Fahrzeug abgestrahlt und mittels einer Sonaranlage empfangen wurden, erzeugt wird und das Verfahren je Amplitudenspektrum folgende Schritte aufweist:
a) Sortierten (20) von Frequenzlinien in dem Amplitudenspektrum absteigend nach Amplitudengröße, beginnend mit derjenigen Frequenzlinie, welche eine maximale Amplitude aufweist, und Festlegen einer Rangfolge,
b) Auswählen einer vorbestimmten Anzahl der sortierten Frequenzlinien und Festlegen (22) von mehreren Schwellenwerten,
c) Vergleichen (24) von Frequenzlinien miteinander zum Bilden von Linienpaaren unter Berücksichtigung mindestens eines Schwellenwertes,
d) Zusammenfassen (28) der Linienpaare mit annähernd gleicher Grundfrequenz zu einem vorläufigen Frequenzliniensatz und Bewerten des vorläufigen Frequenzliniensatzes anhand einer Mehrzahl von Parametern, insbesondere unter Berücksichtigung von Anzahl, Sequenz, Amplitude und Dichte der Frequenzlinien,
e) Ermitteln (32) endgültiger Frequenzliniensätze aus den vorläufigen Frequenzliniensätzen mittels eines Ausschlussverfahrens unter Berücksichtigung der Bewertung der vorläufigen Frequenzliniensätze und eines oder mehrerer Schwellenwerte, und
Bestimmen (38) des Frequenzlinienmusters des wenigstens einen detektierten Fahrzeugs durch Zusammenfassen von evtl. vorhandenen Einzellinien und den endgültigen Frequenzliniensätzen des Amplitudenspektrums oder der Amplitudenspektren.

2. Verfahren nach Anspruch 1,
**dadurch gekennzeichnet, dass**
die Linienpaare mit einer zugehörigen Grundfrequenz aus einer ersten Frequenzlinie und einer zweiten Frequenzlinie gebildet werden, wobei die Frequenz der ersten Frequenzlinie höher ist als die Frequenz der zweiten Frequenzlinien, und wobei ein Linienpaar gebildet wird, wenn entweder die Frequenz der ersten Frequenzlinie annähernd ein Mehrfaches der Frequenz der zweiten Frequenzlinie ist und dann die Frequenz der zweiten Frequenzlinie die Grundfrequenz des Linienpaares ist oder die Frequenzen der beiden zu vergleichenden Frequenzlinien annähernd ein Mehrfaches des Betrags der Frequenzdifferenz der beiden Frequenzen der zu vergleichenden Frequenzlinien ist und dann der Betrag der Frequenzdifferenz die Grundfrequenz des Linienpaares ist.

3. Verfahren nach Anspruch 1 oder 2,
**dadurch gekennzeichnet, dass**
das Amplitudenspektrum oder die Amplitudenspektren mittels einer DEMON-Analyse und/oder einer LOFAR-Analyse ermittelt wird bzw. werden, wobei das Amplitudenspektrum bzw. die Amplitudenspektren über einen vorbestimmten Zeitabschnitt gemittelt und normiert wird bzw. werden.

4. Verfahren nach einem der vorhergehenden Ansprüche,
**dadurch gekennzeichnet, dass**
die Schwellenwerte oberhalb eines ermittelten Rauschpegels dynamisch anhand der maximalen Amplitude und einer minimalen Amplitude der in b) ausgewählten Frequenzlinien festgelegt werden, wobei ein Schwellenwert wenige Frequenzlinien im Amplitudenspektrum mit den größten Amplitudenwerten bestimmt und/oder ein weiterer Schwellenwert Frequenzlinien im Amplitudenspektrum bestimmt, welche sich signifikant vom Rauschpegel abheben und/oder ein weiterer Schwellenwert Frequenzlinien im Amplitudenspektrum bestimmt, welche sich nur gering vom Rauschpegel abheben und/oder ein weiterer Schwellenwert Frequenzlinien im Amplitudenspektrum bestimmt, welche als Einzellinien gelten.

5. Verfahren nach einem der vorhergehenden Ansprüche,
**dadurch gekennzeichnet, dass**
die Parameter unter d) des vorläufigen Frequenzliniensatzes die Amplitudenwerte der zugehörigen Frequenzlinien sowie die relative Lage der Frequenzlinien zueinander berücksichtigen und/oder die zugehörige Grundfrequenz als eine gemessene und/oder eine berechnete Größe berücksichtigen.

6. Verfahren nach einem der vorhergehenden Ansprüche,
**dadurch gekennzeichnet, dass**
die Frequenzlinien in dem Amplitudenspektrum, die nach einer Subtraktion der ermittelten Frequenzliniensätze in dem Amplitudenspektrum enthalten sind und einen vorbestimmten Schwellenwert zum Bestimmen von Einzellinien überschritten haben, zu Einzellinien bestimmt werden.

7. Verfahren nach einem der vorhergehenden Ansprüche,
**dadurch gekennzeichnet, dass**
das ermittelte Frequenzlinienmuster des wenigstens einen Amplitudenspektrums mittels eines Güteparameters, insbesondere in Abhängigkeit von Sequenz, Anzahl, Amplituden, Dichte und/oder Grundfrequenz der zugehörigen Frequenzlinien, bewertet wird.

8. Verfahren nach einem der vorhergehenden Ansprüche,
**dadurch gekennzeichnet, dass**
für den Fall, dass kein Frequenzlinienmuster erkannt wurde, das Verfahren mehrmals mit geänderten Parametern, insbesondere Suchfenster und/oder Schwellenwerte, erneut durchgeführt wird.

9. Verfahren nach einem der vorhergehenden Ansprüche,
**dadurch gekennzeichnet, dass**
Eigenbootgeräusche bei der Durchführung des Verfahrens berücksichtigt werden und diejenigen Frequenzlinien in dem Amplitudenspektrum, welche aufgrund der Eigenbootgeräusche entstehen, nicht im Verfahren berücksichtigt werden.

10. Verfahren nach einem der vorhergehenden Ansprüche,
**dadurch gekennzeichnet, dass**
für den Fall, dass zu zwei oder mehr Frequenzlinien eines Frequenzliniensatzes benachbarte Frequenzlinien mit einer geringen Frequenzdifferenz existieren, ein zusätzliches Merkmal festgehalten wird.

11. Verfahren nach einem der vorhergehenden Ansprüche,
gekennzeichnet, dass
zu dem ermittelten Frequenzlinienmuster zugehörige Parameter, insbesondere Propellerinformationen, Maschineninformationen und/oder Getriebeinformationen, als Ergebnisse ausgegeben werden.

12. Verfahren nach einem der vorhergehenden Ansprüche,
**dadurch gekennzeichnet, dass**
das ermittelte Frequenzlinienmuster zeitlich bewertet wird.

13. Verfahren nach einem der vorhergehenden Ansprüche,
**dadurch gekennzeichnet, dass**
das Amplitudenspektrum ein detektiertes Fremdobjekt aus einer Peilrichtung aufweist oder einen größeren Peilungsbereich aufweist, in dem mehrere Fremdobjekte enthalten sind.

14. Verfahren nach einem der vorhergehenden Ansprüche,
**dadurch gekennzeichnet, dass**
mittels des Ausschlussverfahrens alle vorläufigen Frequenzliniensätze, deren Grundfrequenzen annähernd ein Mehrfaches einer Grundfrequenz eines zuvor bestimmten vorläufigen Frequenzliniensatzes betragen, aussortiert werden.

15. Vorrichtung zur Bestimmung eines Frequenzlinienmusters innerhalb wenigstens eines Amplitudenspektrums, welches aus akustischen Signalen,
die von wenigstens einem detektiertem Fahrzeug abgestrahlt und mittels einer Sonaranlage empfangen wurden, erzeugbar ist,
**gekennzeichnet durch**
ein Vorverarbeitungsmodul (20), welches derart ausgestaltet ist, um Frequenzlinien in dem oder in jedem Amplitudenspektrum zu sortieren, wobei die Frequenzlinien absteigend nach Amplitudengröße, beginnend mit derjenigen Frequenzlinie, welche eine maximale Amplitude aufweist, sortierbar sind, und um eine Rangfolge der Frequenzlinien festzulegen,
ein Modul zur Parametrisierung und Linienauswahl (22), welches derart ausgestaltet ist, um eine vorbestimmte anzahl an sortierten Frequenzlinien, auszuwählen und um eine Mehrzahl von Schwellenwerten festzulegen, ein Differenz-Matrix-Modul (24), welches derart ausgestaltet ist, um **durch** einen Vergleich von Frequenzlinien unter Berücksichtigung mindestens eines Schwellenwertes Linienpaare zu bilden,
ein Modul (28) zum Ermitteln von vorläufigen Frequenzliniensätzen, welches derart ausgestaltet ist, um die Linienpaare, die eine annähernd gleiche Grundfrequenz aufweisen zu einem vorläufigen Frequenzliniensatz zusammenzufassen und anhand einer Mehrzahl von Parametern, insbesondere unter Berücksichtigung von Anzahl, Sequenz, Amplituden und Dichte der Frequenzlinien, zu bewerten,
ein Modul (32) zum Ermitteln von endgültigen Frequenzliniensätzen, weiches derart ausgestaltet ist, um aus den vorläufigen Frequenzliniensätzen mittels eines Ausschlussverfahrens unter Berücksichtigung der Bewertung der vorläufigen Frequenzliniensätze und eines oder mehrerer Schwellenwerte endgültige Frequenzliniensätze zu ermitteln und
ein Frequenzlinienmustermodul (38), welches derart ausgestaltet ist, um zu wenigstens einem detektierten Fahrzeug **durch** Zusammenfassen von evtl. vorhandenen Einzellinien und den endgültigen Frequenzliniensätzen des Amplitudenspektrums oder der Amplitudenspektren ein Frequenzlinienmuster zu bestimmen.

## Claims

1. Method for determining a frequency line pattern within at least one amplitude spectrum, which is produced from audible signals that were radiated by at least one detected vehicle and received by means of a sonar installation, and the method has the following steps for each amplitude spectrum:
a) sorting (20) of frequency lines in the amplitude spectrum by decreasing amplitude magnitude, starting with the frequency line that has a maximum amplitude, and specifying an order,
b) selection of a predetermined number of the sorted frequency lines and determining (22) of a plurality of threshold values,
c) comparison (24) of frequency lines with one another to form line pairs, taking account of at least one threshold value,
d) aggregation (28) of the line pairs with approximately the same fundamental frequency to give a provisional frequency line set and rating of the provisional frequency line set with reference to a plurality of parameters, in particular taking account of the number, sequence, amplitude and density of the frequency lines,
e) determining (32) final frequency line sets from the provisional frequency line sets by means of an exclusion method, taking account of the rating of the provisional frequency line sets and of one or more threshold values, and
determination (38) of the frequency line pattern of the at least one detected vessel by aggregation of any single lines present and of the final frequency line sets of the amplitude spectrum or the amplitude spectra.

2. Method according to claim 1, **characterised by** that the line pairs with an associated fundamental frequency are formed from a first frequency line and a second frequency line, wherein the frequency of the first frequency line is higher than the frequency of the second frequency line, and wherein a line pair is formed if either the frequency of the first frequency line is approximately a multiple of the frequency of the second frequency line and then the frequency of the second frequency line is the fundamental frequency of the line pair, or the frequencies of the two frequency lines to be compared are approximately a multiple of the amount of the frequency difference of the two frequencies of the frequency lines to be compared and then the amount of the frequency difference is the fundamental frequency of the line pair.

3. Method according to claim 1 or 2, **characterised by** that the amplitude spectrum or the amplitude spectra is or are determined by means of a DEMON analysis and/or a LOFAR analysis, wherein the amplitude spectrum or the amplitude spectra is or are averaged and normalised via a predetermined time section.

4. Method according to one of the preceding claims, **characterised by** that the threshold values above an established noise level are determined dynamically with reference to the maximum amplitude and a minimum amplitude of the frequency lines selected in b), wherein a threshold value defines few frequency lines in the amplitude spectrum with the biggest amplitude values and/or another threshold value determines frequency lines in the amplitude spectrum that stand out significantly from the noise level and/or another threshold value determines frequency lines in the amplitude spectrum that only stand out slightly from the noise level and/or another threshold value determines frequency lines in the amplitude spectrum that are regarded as single lines.

5. Method according to one of the preceding claims, **characterised by** that the parameters under d) of the provisional frequency line set take account of the amplitude values of the associated frequency lines and the relative position of the frequency lines to one another and/or take account of the associated fundamental frequency as a measured and/or a calculated magnitude.

6. Method according to one of the preceding claims, **characterised by** that the frequency lines in the amplitude spectrum that are contained in the amplitude spectrum following a subtraction of the determined frequency line sets and that have exceeded a predetermined threshold value to determine single lines are determined to single lines.

7. Method according to one of the preceding claims, **characterised by** that the determined frequency line pattern of the at least one amplitude spectrum is rated by means of a quality parameter, in particular as a function of sequence, number, amplitudes, density and/or fundamental frequency of the associated frequency lines.

8. Method according to one of the preceding claims, **characterised by** that in the case that no frequency line pattern was detected, the method is executed again several times with changed parameters, in particular search windows and/or threshold values.

9. Method according to one of the preceding claims, **characterised by** that characteristic boat noises are taken into account when executing the method and the frequency lines in the amplitude spectrum that arise on account of the characteristic boat noises are not taken into account in the method.

10. Method according to one of the preceding claims, **characterised by** that in the case that for two or more frequency lines of a frequency line set adjacent frequency lines exist with a small frequency difference, an additional feature is recorded.

11. Method according to one of the preceding claims, **characterised by** that parameters assigned to the determined frequency line pattern, in particular propeller information, machine information and/or transmission information, are output as results.

12. Method according to one of the preceding claims, **characterised by** that the determined frequency line pattern is rated timewise.

13. Method according to one of the preceding claims, **characterised by** that the amplitude spectrum has a detected foreign object from a bearing direction or has a greater bearing range in which a plurality of foreign objects is contained.

14. Method according to one of the preceding claims, **characterised by** that all provisional frequency line sets of which the fundamental frequencies amount approximately to a multiple of a fundamental frequency of a provisional frequency line set determined previously are sorted out by means of the exclusion method.

15. Device for determining a frequency line pattern within at least one amplitude spectrum, which can be produced from audible signals that were radiated by at least one detected vessel and received by means of a sonar installation, **characterised by**
a preprocessing module (20), which is configured so as to sort frequency lines in the or in each amplitude spectrum, wherein the frequency lines can be sorted decreasing by amplitude magnitude, starting with the frequency line that has a maximum amplitude, in order to determine an order of the frequency lines,
a module for parameterising and line selection (22), which is configured so as to select a predetermined number of sorted frequency lines and to determine a plurality of threshold values,
a difference matrix module (24), which is configured so as to form line pairs by a comparison of frequency lines, taking account of at least one threshold value,
a module (28) for determining provisional frequency line sets, which module is configured so as to aggregate the line pairs that have an approximately identical fundamental frequency and to rate them with reference to a plurality of parameters, in particular taking account of number, sequence, amplitudes and density of the frequency lines,
a module (32) for determining final frequency line sets, which module is configured so as to determine final frequency line sets from the provisional frequency line sets by means of an exclusion method, taking account of the rating of the provisional frequency line sets and one or more threshold values and
a frequency line pattern module (38), which is configured so as to determine a frequency line pattern for at least one detected vessel by aggregation of any single lines present and of the final frequency line sets of the amplitude spectrum or the amplitude spectra.

## Revendications

1. Procédé pour déterminer un modèle de lignes de fréquence dans au moins un spectre d'amplitude, qui est généré à partir de signaux acoustiques, qui ont été émis par au moins un véhicule détecté et reçus au moyen d'une installation sonar, et le procédé comportant, pour chaque spectre d'amplitude, les étapes suivantes consistant à :
a) trier (20) des lignes de fréquence dans le spectre d'amplitude de manière décroissante selon la dimension de l'amplitude, en commençant par la ligne de fréquence qui présente une amplitude maximale, et définir un classement,
b) sélectionner un nombre prédéterminé des lignes de fréquence triées et définir (22) plusieurs valeurs seuils,
c) comparer (24) des lignes de fréquence entre elles pour former des paires de lignes en tenant compte d'au moins une valeur seuil,
d) regrouper (28) les paires de lignes présentant une fréquence fondamentale approximativement identique en un ensemble de lignes de fréquence provisoire et évaluer l'ensemble de lignes de fréquence provisoire à l'aide d'une pluralité de paramètres, en particulier en tenant compte du nombre, de la séquence, de l'amplitude et de la densité des lignes de fréquence,
e) déterminer (32) des ensembles de lignes de fréquence définitifs à partir des ensembles de lignes de fréquence provisoires au moyen d'un procédé d'exclusion en tenant compte de l'évaluation des ensembles de lignes de fréquence provisoires et d'une ou de plusieurs valeurs seuils, et
déterminer (38) le modèle de lignes de fréquence de l'au moins un véhicule détecté en regroupant des lignes individuelles éventuellement présentes et les ensembles de lignes de fréquence définitifs du spectre d'amplitude ou des spectres d'amplitude.

2. Procédé selon la revendication 1,
**caractérisé en ce que**
les paires de lignes avec une fréquence fondamentale associée sont formées à partir d'une première ligne de fréquence et d'une seconde ligne de fréquence, la fréquence de la première ligne de fréquence étant supérieure à la fréquence de la seconde ligne de fréquence, et une paire de lignes étant formée, soit quand la fréquence de la première ligne de fréquence est approximativement un multiple de la fréquence de la seconde ligne de fréquence et qu'alors la fréquence de la seconde ligne de fréquence est la fréquence fondamentale de la paire de lignes, soit quand les fréquences des deux lignes de fréquence à comparer sont approximativement un multiple de la valeur de la différence de fréquence entre les deux fréquences des lignes de fréquence à comparer et qu'alors la valeur de la différence de fréquence est la fréquence fondamentale de la paire de lignes.

3. Procédé selon la revendication 1 ou 2,
**caractérisé en ce que**
le spectre d'amplitude ou les spectres d'amplitude est/sont déterminé(s) au moyen d'une analyse DEMON et/ou d'une analyse LOFAR, la moyenne du spectre d'amplitude ou des spectres d'amplitude étant formée et le spectre d'amplitude ou les spectres d'amplitude étant normalisé(s), pour un intervalle de temps prédéterminé.

4. Procédé selon l'une des revendications précédentes,
**caractérisé en ce que**
les valeurs seuils au-dessus d'un niveau de bruit déterminé sont définies de manière dynamique à l'aide de l'amplitude maximale et d'une amplitude minimale des lignes de fréquence sélectionnées en b), une valeur seuil déterminant quelques lignes de fréquence dans le spectre d'amplitude avec les valeurs d'amplitude les plus élevées et/ou une autre valeur seuil déterminant des lignes de fréquence dans le spectre d'amplitude, qui se détachent de manière significative du niveau de bruit, et/ou une autre valeur seuil déterminant des lignes de fréquence dans le spectre d'amplitude, qui ne se détachent que faiblement du niveau de bruit, et/ou une autre valeur seuil déterminant des lignes de fréquence dans le spectre d'amplitude, qui sont considérées comme lignes individuelles.

5. Procédé selon l'une des revendications précédentes,
**caractérisé en ce que**
les paramètres en d) de l'ensemble de lignes de fréquence provisoire tiennent compte des valeurs d'amplitude des lignes de fréquence associées ainsi que de la position relative des lignes de fréquence entre elles et/ou tiennent compte de la fréquence fondamentale associée comme une grandeur mesurée et/ou calculée.

6. Procédé selon l'une des revendications précédentes,
**caractérisé en ce que**
les lignes de fréquence dans le spectre d'amplitude, qui sont contenues dans le spectre d'amplitude après une soustraction des ensembles de lignes de fréquence déterminés et qui ont dépassé une valeur seuil prédéterminée pour la détermination de lignes individuelles, sont déterminées comme lignes individuelles.

7. Procédé selon l'une des revendications précédentes,
**caractérisé en ce que**
le modèle de lignes de fréquence déterminé de l'au moins un spectre d'amplitude est évalué au moyen d'un paramètre de qualité, en particulier en fonction de la séquence, du nombre, des amplitudes, de la densité et/ou de la fréquence fondamentale des lignes de fréquence associées.

8. Procédé selon l'une des revendications précédentes,
**caractérisé en ce que**
dans le cas où aucun modèle de lignes de fréquence n'a été détecté, le procédé est exécuté de nouveau plusieurs fois avec des paramètres modifiés, en particulier la fenêtre de recherche et/ou les valeurs seuils.

9. Procédé selon l'une des revendications précédentes,
**caractérisé en ce que**
les bruits propres du bateau sont pris en compte lors de l'exécution du procédé et les lignes de fréquence dans le spectre d'amplitude qui apparaissent en raison des bruits propres du bateau ne sont pas prises en compte dans le procédé.

10. Procédé selon l'une des revendications précédentes,
**caractérisé en ce que**
dans le cas où, parmi deux lignes de fréquence ou plus d'un ensemble de lignes de fréquence, il y a des lignes de fréquence voisines ayant une faible différence de fréquence, une caractéristique supplémentaire est retenue.

11. Procédé selon l'une des revendications précédentes,
**caractérisé en ce que**
des paramètres associés au modèle de lignes de fréquence déterminé, en particulier des informations relatives à des hélices, des informations relatives à des machines et/ou des informations relatives à une chaîne cinématique, sont donnés comme résultats.

12. Procédé selon l'une des revendications précédentes,
**caractérisé en ce que**
le modèle de lignes de fréquence déterminé est évalué dans le temps.

13. Procédé selon l'une des revendications précédentes,
**caractérisé en ce que**
le spectre d'amplitude comporte un objet étranger détecté émanant d'une direction de repérage ou comporte un domaine de repérage plus grand, dans lequel se trouvent plusieurs objets étrangers.

14. Procédé selon l'une des revendications précédentes,
**caractérisé en ce que**
au moyen du procédé d'exclusion, tous les ensembles de lignes de fréquence provisoires dont les fréquences fondamentales sont approximativement un multiple d'une fréquence fondamentale d'un ensemble de lignes de fréquence provisoire déterminé précédemment sont rejetés.

15. Dispositif de détermination d'un modèle de lignes de fréquence dans au moins un spectre d'amplitude, qui peut être généré à partir de signaux acoustiques, qui ont été émis par au moins un véhicule détecté et reçus au moyen d'une installation sonar,
**caractérisé par**
un module de prétraitement (20), qui est conçu de manière à trier des lignes de fréquence dans le ou dans chaque spectre d'amplitude, les lignes de fréquence pouvant être triées de manière décroissante selon la dimension de l'amplitude, en commençant par la ligne de fréquence qui présente une amplitude maximale et à définir un classement des lignes de fréquence,
un module pour le paramétrage et la sélection de lignes (22), qui est conçu de manière à sélectionner un nombre prédéterminé de lignes de fréquence triées et à définir une pluralité de valeurs seuils,
un module de matrice de différences (24), qui est conçu de manière à former des paires de lignes au moyen d'une comparaison de lignes de fréquence en tenant compte d'au moins une valeur seuil,
un module (28) pour la détermination d'ensembles de lignes de fréquence provisoires, qui est conçu de manière à regrouper les paires de lignes qui présentent une fréquence fondamentale approximativement identique en un ensemble de lignes de fréquence provisoire et à les évaluer, à l'aide d'une pluralité de paramètres, en particulier en tenant compte du nombre, de la séquence, des amplitudes et de la densité des lignes de fréquence,
un module (32) pour la détermination d'ensembles de lignes de fréquence définitifs, qui est conçu de manière à déterminer des ensembles de lignes de fréquence définitifs à partir des ensembles de lignes de fréquence provisoires au moyen d'un procédé d'exclusion en tenant compte de l'évaluation des ensembles de lignes de fréquence provisoires et d'une ou de plusieurs valeurs seuils et
un module de modèle de lignes de fréquence (38), qui est conçu de manière à déterminer pour au moins un véhicule détecté un modèle de lignes de fréquence en regroupant des lignes individuelles éventuellement présentes et les ensembles de lignes de fréquence définitifs du spectre d'amplitude ou des spectres d'amplitude.
